# EUROPEAN PATENT APPLICATION

(11) **EP 4 687 087 A1**
(43) Date of publication of application: **04.02.2026**
(21) Application number: 24191447.2
(22) Date of filing: 29.07.2024
(51) Int. Cl.: G06Q 20/06, G06Q 20/36, G06Q 20/38

(54) **SECURE TOKEN TRANSACTION UNIT, SECURE TOKEN REFERENCE REGISTER, ELECTRONIC PAYMENT TRANSACTION SYSTEM AND METHOD FOR SECURING A TRANSACTION**

(71) Applicant: Giesecke+Devrient advance52 GmbH, 81677 München (DE)
(72) Inventor: Sequeira, Severino, 81677 München (DE)
(74) Representative: Ter Meer Steinmeister & Partner

(57) **Abstract**

The present disclosure relates to a secure token transaction unit within an electronic payment transaction system, the secure token transaction unit comprising: a secure memory for storing a plurality of token, wherein each token is a monetary value token, preferably a central bank digital currency token; and a control module configured to: generate, for a first transaction which transforms an input token stored in the secure memory to a first intermediate token and a first intermediate partner token, a first replacement request; and generate, related to the first transaction, a token record, in which the first intermediate token and the first replacement request are stored. The control module is characterized by being further configured to update, related to a second transaction, the token record by substituting the first replacement request by a second replacement request.

## Description

The present invention relates to a secure token transaction unit and a secure token reference register within an electronic payment transaction system. The invention also relates to the electronic payment transaction system itself and a method for securing a transaction of a central bank digital currency token in the electronic payment transaction system.

Tokens - also referred to as digital assets, electronic coins, coin data sets - may represent any digital asset, in particular a digital currency, preferably a central bank digital currency, short CBDC. These tokens are issued and deleted by a unit of the transaction system, such as an issuing authority, or a central bank unit or a commercial bank unit, hereinafter also referred to as secure token issuing unit.

Electronic token transactions and/or storage of tokens and any associated transaction data and/or storage data must be safe and secure and so, means for protecting confidentiality, integrity, and availability of exchanged and/or stored token data must be implemented. This is true for electronic payment transactions and associated payment transactions and payment storages in which a monetary value is linked with each token, subsequently also referred to as a token value.

There are different technical approaches for a digital asset e.g., digital currency such as central bank digital currency, CBDC, issued by a central bank.

According to a first approach, tokens are merely cryptographically secured by the central bank unit and the cryptographically secured tokens are exchanged directly between token management units - also referred to as wallets - of the participants in an encrypted manner. The exchanged token may also be stored in an encrypted manner. The token management units can verify the authenticity of the tokens based on the cryptographic security, such as keys and signatures, and for example checks a certificate from the central bank and/or the other token management units for validity within the certificate hierarchy in advance via online access or following the offline-protocol of the system.

According to a second approach, tokens are stored in a centralized or decentralized blockchain/distributed ledger of the transaction system, e.g., organized by a central bank unit. For a transaction, an ownership of a token record changes in the blockchain for which a lot of information (sender/recipient/amount) is required and/or even published. Sender and recipient of the token need an online access to the blockchain at the time of the transaction.

According to a favorable third approach as for instance described in WO 2020 / 212 331 A1 or WO 2023 / 036 458 A1 tokens are stored in a local token management unit to be directly exchanged between participants of an electronic payment transaction system. The transferred token can validly be used after receipt from another participant without a need of approval or verification via an online connection. So, if an online connection is not available or inconvenient or should not be used for a specific token transaction, it remains possible to validly transfer tokens directly between participants in the electronic payment transaction system. For security-, verification- and registration-purposes, a token register stores token references of all valid tokens without knowing the tokens itself. So, the user can check validity of a received token. The token register only stores token references of the corresponding token. Tokens can be switched, split or merged by each individual participant, e.g., ownership of tokens can be switched from one participant to another participant, tokens can be split into plural tokens, e.g., for obtaining a token with a reduced monetary value and/or plural tokens can be merged to a single token, e.g., for obtaining a token with a higher monetary value.

For managing the tokens, such as performing the transactions and storing the tokens, secure token management units, also known as wallets, are used. For the second approach these wallets are referred to as account wallets. For the third approach, these wallets are referred to as account-wallets or token-wallets.

A wallet can be provided as a hardware wallet, e.g. as a smart card issued to a participant, or can be a so-called hosted-wallet, e.g. a wallet that is hosted by the individual service provider.

Electronic token transactions and/or storage of tokens and any associated transaction data and/or storage data in an electronic token transaction system must be safe and secure and so, means for protecting confidentiality, integrity, and availability of exchanged and/or stored token data must be implemented. This is especially true for electronic payment transactions and associated payment transactions and payment storages in which a monetary value is linked with each token.

The direct transaction of tokens can be executed offline between two secure token transaction units, i.e., without the need of an internet connection. An online communication channel is only required for security-, verification- and registration-purposes. New tokens generated for an offline token transactions may be registered after the transaction has occurred, in particular decoupled in time. Particularly after multiple offline transactions a register request may comprise a chain of replacements to be registered.. Consequently, the register request of a secure token transaction unit may comprise several token references of which each needs to be verified individually.

Hence, there is a need for more efficiently registering or verifying chains of offline transactions in an electronic payment system. There is further a need to provide a secure token transaction unit being configured to execute and register consecutive transactions more efficiently. Accordingly, there is a need to provide a corresponding secure token reference register.

The above-identified objectives are solved with the features of the independent patent claims. Further advantageous embodiments are described in the dependent patent claims.

In an aspect of the present invention there is provided a secure token transaction unit within an electronic payment transaction system.

The secure token transaction unit comprises a secure memory for storing a plurality of tokens, wherein each token is a monetary value token, preferably a central bank digital currency token. The secure token transaction unit further comprises a control module. The control module is configured to generate, for a first transaction according to which an input token stored in the secure memory is transformed to a first intermediate token and a first intermediate partner token, a first replacement request. The control module is further configured to generate, related to the first transaction, a token record, in which the first intermediate token and the first replacement request are stored. The control module is characterized by being configured to update, related to a second transaction, the token record by substituting the first replacement request by a second replacement request.

The term "transaction" represents a transaction of a monetary value token between a sender and a recipient. A transaction of monetary value tokens may represent a payment transaction, i.e., the change of an ownership of an amount of money, wherein the amount of money relates to the monetary values of the tokens involved in the transaction. A transaction may include a request for a monetary value by the transaction partner.

In one embodiment, a transaction may include a token transformation phase and a token transmission phase. The token transformation phase of a transaction is prior, preferably immediately prior, to the token transmission phase.

In one embodiment, the token transformation phase of a transaction may include a splitting, merging and/or re-registering of one or more input tokens, e.g. for generating new intermediate tokens with monetary values necessary to be transferred within this particular transaction.

In one embodiment, the token transmission phase of a transaction may include the transmission of one or more intermediate tokens subsequent, preferably directly subsequent, to the token transformation phase, e.g. for transmitting one or more of the prior generated intermediate tokens within this particular transaction between the respective transaction participants.

In one embodiment, each token may comprise a token-individual token secret, preferably a private key of a token-individual cryptographic key pair and a token value, wherein the token value is the monetary value. The private key of a cryptographic key pair may include a random number and optionally a counter value or a constant value. Each token may be stored as an encrypted token in the secure memory to enhance security-at-rest.

In one embodiment, the control module is adapted to generate, for the input token and at least for the first intermediate token, a public key using a cryptographic function based on the private key of each token, wherein the token value and the public key form a token reference. The cryptographic function may be a one-way cryptographic encryption function, e.g., based on an asymmetric or symmetric encryption scheme.

In one embodiment, a replacement request may comprise a command which encodes how the control module transforms the input token. The replacement request is a request to replace one or more input tokens for this transformation by the generated one or more intermediate token or output token at a secure token reference register. In one embodiment, the first replacement request may be configured to replace the input token by the first intermediate token and the first intermediate partner token. The second replacement request may be configured to replace the same input token by the second intermediate token and the second intermediate partner token. The second replacement request may be exclusively generated for a second transaction, if the first replacement request for a preceding first transaction has not yet been registered. The secure token reference register, however, only should have knowledge of token references, not the tokens itself. Thus, the replacement request may trigger a replacement of an input token reference, by a first intermediate token reference and a first intermediate partner token reference in the secure token reference register to register the tokens generated during the first transaction. In addition, the secure token reference register may be configured to verify at least some of the token references involved.

The secure token transaction unit may be a secure token-wallet which is used to locally manage the tokens in a secure memory element, to transform the tokens and to register references to the tokens in the electronic payment transaction system. The token may be stored in a token storage that is also managed by the token-wallet.

In contrast to known token transaction units, the secure token transaction unit according to an aspect of the invention has the advantage that independent on how many offline transactions have been executed, only one replacement request is needed to register the result of the executed transactions. In other words, instead of tracking every single transaction between two partner transaction units in the secure token reference register, the secure token transaction unit is configured to accumulate transactions such that it may register current accumulated monetary values of the intermediate token and intermediate partner token involved.

The term "intermediate" as used for the intermediate token and intermediate partner token represents that these tokens are not necessarily registered in the secure token reference register, i.e., may not be reconciled by one of the transaction partners or transaction participants. Instead, intermediate tokens may be substituted by another intermediate token involved in a further transaction. That is, consecutive transactions between the same partner transaction units may replace the intermediate token and the intermediate partner token. In other words, for a first transaction, an input token is transformed into a first intermediate token and a first intermediate partner token, whereas for the second transaction, the same input token may be transformed into a second intermediate token and a second intermediate partner token which substitute the first intermediate token in the token record and the first intermediate partner token, respectively. In case one of the transaction partners wishes to reconcile the transaction chain after the second transaction, only the second intermediate token and/or the second intermediate partner token are registered and/or verified. Upon reconciling the latest transaction, the corresponding input token may be deleted from the electronic payment system. An intermediate token may have a temporary character since it may be overridden by the next transaction before being registered.

In other words, the secure token transaction unit may increase the efficiency of registering multiple consecutive transactions between the same transaction partners in case it is sufficiently trustworthy to keep track of a current state of a transaction balance upon request, i.e., an accumulated transaction chain, instead of each single transaction of such transaction chain.

In one embodiment, the intermediate token or the intermediate partner token may be used as new input tokens for a further (offline) transaction before being registered or reconciled.

In one embodiment, registration of an intermediate token results in an output token.

The signed replacement request stored in the secure memory of the secure transaction unit may be considered a proof of the transaction. Thus, replacing the first replacement request by a second replacement request results in destroying the proof of the first transaction, i.e., the first transaction as such may not be registered/reconciled anymore after the second transaction between the same transaction partners has been executed.

The secure token transaction unit may be assigned to a participant or user in the electronic payment transaction system, who may be a natural person, a legal person, an organization, and/or a machine, e.g., an internet-of-things, element.

In one embodiment embodiment, the control module may be further adapted to generate an initial transfer request related to the first intermediate token or the first intermediate partner token and to send the initial transfer request to the secure partner token transaction unit via a direct secure communication connection.

The initial transfer request may be a request for a monetary value of a participant or user in the electronic payment transaction system to be transferred to a secure token transaction unit. The initial transfer request may be either issued by a first secure token transaction unit storing the input tokens or, preferably, by a second secure token transaction unit expecting at least a share of the monetary value of the input token.

In one embodiment, the control module may be further configured to generate a token-individual cryptographic key pair for the first intermediate token and for the first intermediate partner token. This procedure may require, however, to transmit the private key of the first intermediate partner token to the secure partner transaction unit. Alternatively, the control module may be configured to receive a public key of the first intermediate partner token and to generate the first replacement request to the secure token reference register based thereon. This embodiment has the advantage that there is no transfer of private keys required.

A secure token transaction unit (as described herein), also referred to as secure wallet, secure token management unit; token wallet; and/or wallet may be used to locally manage token in a secure element or secure memory itself and/or to transform the tokens and to register the token in the electronic token transaction system. The token may be stored in a token storage that is also managed by the token wallet.

Each secure token transaction unit comprises one secure token transaction unit identifier, also referred to as wallet-ID or wallet identification data. The secure token transaction unit identifier is assigned to a specific secure token transaction unit for uniquely identifying the secure token transaction unit in the electronic token transaction system. The secure token transaction unit identifier is preferably stored in the specific secure wallet.

The secure token transaction unit identifier may be generated at the unit that issues the secure token transaction unit, such as a financial service provider unit or a central entity in the transaction system. The generation may comprise a coding of data by control means of that issuing unit. In such a case, the service provider unit may code the secure token transaction unit identifier. This coding is performed to assign the secure token transaction unit identifier with the secure token transaction unit that is to be issued. Each token transaction made by this secure token transaction unit and/or each token being managed, such as stored, by this secure token transaction unit can be locally protocolled and in case a suspicious transaction or fraudulent pattern is identified, the protocols may be reviewed.

Alternatively, the secure token transaction unit identifier may be generated by an official authority, a secure token issuing unit, e.g., a central bank unit. In this case, the secure token transaction unit identifier may be received by control means of the secure token transaction unit issuing unit or the secure register unit.

In one embodiment, the secure token transaction unit identifier is a mandatory data to be transmitted between individual users in the electronic transaction system for direct exchange of tokens. This may be a system requirement to ensure high standard security and in such a case, the secure token transaction unit identifier is not only used to uniquely identify the secure token transaction unit, but also possible to eventually identify the "real" user by resolving the user information by using an additional secure register unit.

In one embodiment, in the second replacement request, at least the first intermediate token may be amended with respect to the first replacement request and/or the first intermediate token may be substituted in the token record by a second intermediate token, preferably including at least an amended monetary value. In other words, the first intermediate token may be replaced by a second intermediate token. Similarly, the first intermediate partner token may be replaced by a second intermediate partner token. In case of a full refund, i.e., the second intermediate token corresponds to the input token, however, the first intermediate partner token may be removed or replaced by NULL.

In one embodiment, in the second transaction a second intermediate monetary value token T4 may substitute the first intermediate monetary value token in the token record. A second replacement request for the token register may substitute the first replacement request in the token record, wherein the second replacement request may request to replace registration of the input token of the first transaction by registration of the second intermediate token and a second intermediate partner token.

In one embodiment, the control module may be further configured to store a partner identifier in the token record, wherein the partner identifier preferably is one of a random number, a wallet ID, a public key or combinations thereof, and wherein the control module is preferably configured to update the token record (step c) only if the partner identifier (P-ID) of a secure partner token transaction unit corresponds to the partner identifier stored in the token record. Accordingly, the token record may represent a transaction channel between the partner transaction units, which is identified by the partner identifier of the secure partner token transaction unit.

In one embodiment, the control module may be further configured to transmit a replacement request stored in the token record to a secure token reference register for selectively registering only a current intermediate token stored in the token record. In other words, the control module may register only the own intermediate token, not the intermediate partner token. A control module of a secure partner transaction unit may only register the intermediate partner token, not the intermediate token owned by the secure token transaction unit.

In one embodiment, the control module may be further configured to receive, from the secure token reference register or from a further secure token transaction unit, upon registration of a current intermediate token stored in the token record, a replacement request confirmation, and to store the replacement request confirmation in the secure memory, preferably in the token record.

In one embodiment, the control module may be further configured to verify the replacement confirmation and/or send the replacement confirmation to the secure partner token transaction unit. The replacement confirmation may be signed by the secure token reference register which further increases the security in the electronic payment transaction system. Forwarding the replacement confirmation to the secure partner token transaction unit has the additional advantage that the secure partner token transaction unit receives the knowledge that the generated intermediate tokens are valid and registered in the secure token reference register. So, the generated tokens may be used for subsequent token transactions.

In one embodiment, upon receiving and/or storing the replacement request confirmation, the control module is configured to delete the input token from the secure memory. In other words, a registered intermediate token may replace the input token in the secure token transaction unit.

In one embodiment, the control module may be further configured to sign each replacement request based on an individual token secret of the input token, wherein the token record preferably comprises the individual token secret of the input token.

In one embodiment, the control module may be further configured to send the first intermediate partner token and preferably the first replacement request to a secure partner token transaction unit and/or receive the first intermediate partner token and preferably the first replacement request from a secure partner token transaction unit. The intermediate partner token and preferably the first replacement request or subsequent replacement requests may be transmitted or exchanged over the direct communication channel between the two partner transaction units.

In one embodiment, the control module may be configured to receive a transaction request comprising the partner identifier, check, whether the token record assigned to the partner identifier exists and/or the transaction request may indicate selecting the token record. In other words, the same token record may be used for a subsequent token transaction irrespective of being initiated by the secure token transaction unit or the secure partner token transaction unit.

In one embodiment, the control module may be configured to store a log file of the transaction separately from the token record, wherein the log file may include data on the transaction partner TU2, a value of the transaction, transaction time and/or transaction ID.

Provided is further a terminal device comprising a secure token transaction unit as described above or an electronic wallet, wherein the electronic wallet comprises the secure token transaction unit as described above.

In an embodiment, the secure token transaction unit is a secure element that is operatively connected to the terminal device of a participant in the electronic payment system.

In an embodiment, the secure token transaction unit is a secure wallet that is hosted at a service provider unit.

The secure token transaction unit may comprise a token storage as a physical entity. The secure token transaction unit may be configured to access the token storage. The token storage may be a token vault of this secure token transaction unit. Each secure token transaction unit in the transaction system may comprise its own token storage.

From such token storage accessible by the secure token transaction unit, each token can be transferred to any other secure token transaction unit, e.g., owned by a customer of the secure token transaction unit.

The secure token transaction unit may be a secure wallet that may be a hardware security module built in hardware or software to enable tamperproof and secure access to the tokens.

In an aspect of the invention, it is further provided a secure token reference register within an electronic payment transaction system. The secure token reference register comprises: a secure memory for storing registered token references; a secure communication interface for receiving and sending data to one or more secure token transaction units of the electronic payment transaction system; and a control module. The control module is configured to receive a replacement request from the secure token transaction unit, wherein the replacement request comprises an input token reference and an intermediate token reference and/or an intermediate partner token reference; store the intermediate token reference and/or the intermediate partner token reference in the secure memory; and send a replacement confirmation to the secure token transaction unit.

In an embodiment, the replacement request further comprises a signature. The control module may be further configured to determine whether the intermediate token reference and/or the intermediate partner token reference is valid by verifying the intermediate token reference and/or the intermediate partner token reference based on the signature. Moreover, the control module may be configured to store the intermediate token reference and/or the intermediate partner token reference in the secure memory and send a replacement confirmation to the secure token transaction unit only if the signature is valid.

So, by means of the signed replacement request, an intermediate token becomes registered as a valid output token in the token transaction system and can be used for further online or offline electronic payment transactions.

In one embodiment, the control module of the secure token reference register may be configured to test whether the difference the monetary value of the input token reference and the sum of the monetary value of the intermediate token reference and the intermediate partner token reference is zero and/or whether a total sum of token values in the electronic payment transaction system remains constant upon executing the secure replacement request.

In one embodiment, the control module of the secure token reference register may be further configured to extend a data record comprising the input token reference in the secure memory by an additional data field comprising a remaining value of the input token, e.g., the monetary value of the intermediate token.

In one embodiment receives, the secure token reference register may receive a replacement request including multiple intermediate token references, e.g., references to the respective intermediate token and the respective intermediate partner token, and an indication on a specific token reference to select. The control module of the secure token reference register may be configured to selectively register only an indicated token reference.

Provided is further an electronic payment transaction system comprising at least two secure token transaction units as described herein and a secure token reference register as described herein.

In a preferred embodiment, the electronic payment system may be a central bank management system, the token reference register may be an instance of a central bank management system, and each token may represent a monetary value in a central bank digital currency.

In an aspect of the invention, it is further provided a method for securing a transaction of a central bank digital currency token in an electronic payment transaction system. The electronic payment transaction system comprises at least two secure token transaction units, preferably as described herein, and a secure token reference register, preferably as described herein.

The method comprises:
a) generating, for a first transaction according to which an input token (T1) stored in the secure memory is transformed to a first intermediate token (T2) and a first intermediate partner token (T3), a first replacement request (RR1); and
b) generating, related to the first transaction, a token record, in which the first intermediate token (T2) and the first replacement request (RR1) are stored;
   characterized by
c) updating, related to a second transaction, the token record by substituting the first replacement request (RR1) by a second replacement request (RR2).

The method enables the registration of always the latest transaction in a consecutive chain of transactions based on the original input token and thereby avoids to transmit a list of replacement request which scales with the number of consecutive transactions to be registered.

In one embodiment, the method further comprises amending, in the second replacement request, at least the first intermediate token with respect to the first replacement request. The method may further comprise substituting the first intermediate token (T2) in the token record by a second intermediate token (T4), the second intermediate token (T4) preferably including at least an amended monetary value (v4).

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.
Fig. 1 shows a secure electronic payment transaction system for token transactions with secure token transaction units according to an aspect of the invention.
Fig. 2 shows an exemplary embodiment of a secure token reference register according to an aspect of the invention.
Fig. 3 shows an exemplary embodiment of a secure token transaction unit according to an aspect of the invention.
Fig. 4a shows an exemplary flow chart of a method according to an aspect of the invention.
Fig. 4b shows a further exemplary flow chart of a method according to an aspect of the invention.

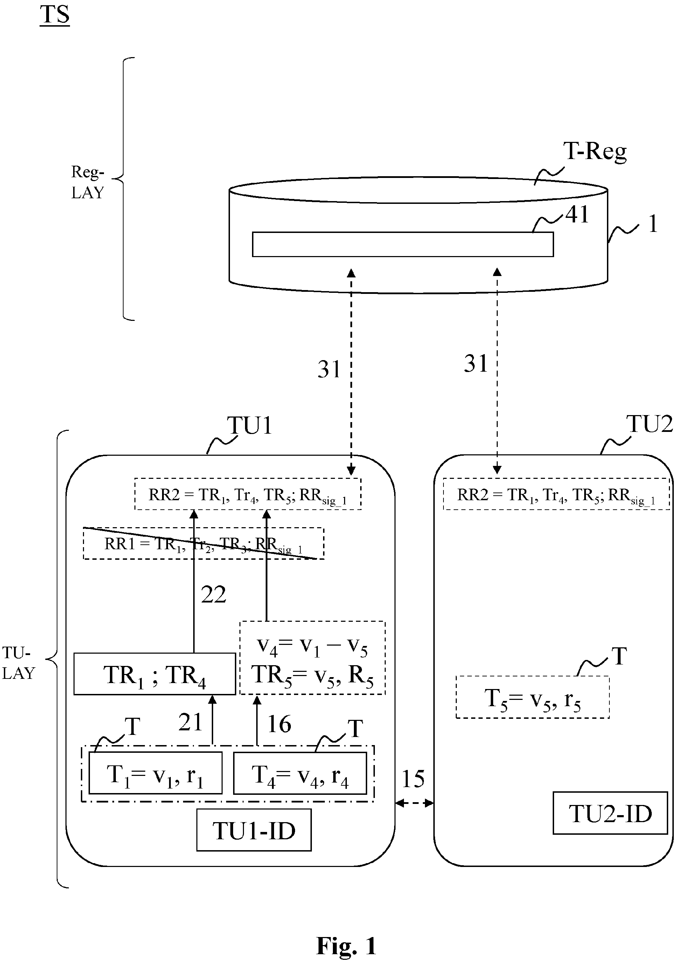

Fig. 1 provides an overview over a secure electronic payment transaction system for token transactions with secure token transaction units according to an aspect of the invention.

Each token T in the secure electronic payment transaction system TS can be transformed according to a command in each token transaction unit TU1, TU2. Two secure token transaction units TU1, TU2 may be involved in a transaction of tokens T.

A token T is uniquely represented by a monetary token value v as well as a token-individual token secret, preferably a private key of a token-individual cryptographic key pair. The private key may include a random number r and further values such as counters or constant values. The token value v may be also referred to as monetary value as it represents the money in a central bank digital currency which is represented by a token. Thus, each token T in this electronic payment transaction system TS has at least two token elements.

The token value v as a first mandatory token element can be specified in a range of values from 1 to 231-1, preferably in a range of values from 1 to 263-1. The random number r may be a number in the range of 0 to 2256 -1, i.e., the order of an elliptic curve, for example secp256r1. For example, the token value v is a 32-bit token element of type integer, preferably a 64-bit token element of type integer.

The random number r as a second mandatory token element is at least a part of a private key of a token-individual key pair. The random number r is unique and secret in the electronic payment transaction system TS and may not be published or reused. The generation of the random number r must be unpredictable. For example, the random number r is a 32-Byte token element of type integer.

For each token T, a token reference TR can be stored in the token reference register T-Reg. The token reference TR comprises the token value v (of the token T) and a public key R that corresponds to the private key r of the token-individual key pair. The token reference TR of the token T can be viewed at any time in the register T-Reg of the electronic payment transaction system TS.

Fig. 1 shows a secure electronic payment transaction system TS after a second transaction. In this example, the secure token transaction unit TU1 may be in possession of an input token T1 comprising a monetary value v1 and a secret r1. The secure token transaction unit TU1 may generate in step 21 a public key R for the token T1. For a first transaction, in which the input token T1 may to be transformed to an intermediate token T2 to be owned by the secure token transaction unit TU1 and a intermediate partner token T3 to be owned by a secure partner transaction unit TU2, which participates in the first transaction, also referred to as transaction partner or partner transaction unit.

The intermediate partner token T3 may be generated in the secure transaction unit TU1 or by the partner transaction unit TU2, of which the latter is depicted in Fig. 1. In this case, the secure token transaction unit TU1 may receive the token reference TR3 of the intermediate partner token T3, i.e., the monetary value v3 and the public key R3 associated with the intermediate partner token T3. The secure token transaction unit may determine the monetary value of the intermediate token T2 from a difference between the token value v1 and the token value v3. Accordingly, the secure token transaction unit TU1 may store the intermediate token T2 and a first replacement request RR1 encoding the token transformation in a token record. In Fig. 1, the replacement request RR1 is diagonally crossed out since the secure token transaction unit is depicted for a second transaction with its transaction partner TU2, for which the first replacement request RR1 has been substituted by the second replacement request RR2.

In this example, the second transaction may split the input token T1 into a second intermediate token T4 and a second intermediate partner token T5, which differ from the first intermediate token T2 and its intermediate partner token T3, also referred to as first intermediate token pair T2, T3. The second intermediate partner token T5 or its reference TR5 may be generated at or received by the secure transaction unit TU1 as described herein for the first intermediate partner token T3 or its reference TR3.

In one embodiment, the replacement request may be signed using the private key r1 of the input token T1, i.e., the first replacement request RR1, the second replacement request RR2 and any further replacement request RR for a transaction between the same transaction partners TU1, TU2 before registering any of the intermediate tokens T2, T3, T4, T5 may be signed by the same private key.

With any known secure token transaction unit the input token is deleted or discarded after each successful offline transaction, such that for each further transaction, a new replacement request RR is appended to the respective previous output token. Thus, the data stored for each output token increases with the number of transactions. Moreover, to register a second transaction, both replacement requests RR1, RR2 and all involved output token references TR2, TR3, TR4, TR5 need to be sent to the secure token reference register T-Reg. Thus, to avoid an increasing length of the registration data, the online registration for CBDC transactions according to known protocols is usually performed whenever available.

According to an aspect of the invention, however, for the second transaction, the secure token transaction unit keeps the input token T1 stored, so that the first replacement request RR1 may be substituted by the second replacement request RR2. Also, the intermediate output tokens T4, T5 involved in the second transaction may replace the intermediate output tokens T2, T3 of the first transaction. In the example of Fig. 1, the second transaction involves the second intermediate token pair T4, T5 as output tokens for the transformation of the input token T1 or for a transformation of the first intermediate token pair T2, T3. In addition, the length of the signature of the replacement request may be constant as any replacement request within the same transaction chain may be signed by the private key r1 or random number of the input token T1. Thus, the length of the registration data does not increase with the number of transactions. Accordingly, the online registration is not necessary anymore to also guarantee smooth operation of the electronic payment system but may be triggered purely based on user requirements.

In one concrete example, the input token T1 may carry a monetary value of 10. In a first transaction, the secure token transaction unit TU1 may transfer a token value of 2 to its transaction partner TU2, i.e., the intermediate token T2 may carry a value of 8 and the intermediate partner token T3 may carry a value of 2. In a second transaction between the same transaction partners TU1, TU2 the partner transaction unit TU2 may request an additional monetary value of 3, resulting in a second intermediate partner token T5 with a monetary value of 5 in total. Also, the second intermediate token T4 comprises a monetary value of 5 after the second transaction. Preferably, the second intermediate token pair T4, T5 may replace the first intermediate token pair T2, T3. In case one of the transaction partner TU1, TU2 wishes to reconcile the latest transaction, it may send the current replacement request to the secure token reference register, which is the second replacement request in this example. The replacement request may further include an indication of which of the involved intermediate tokens should be registered. The indication may be a selection of only one of the intermediate tokens. In case no indication is provided in the replacement request, all involved tokens may be registered and/or verified by the secure token reference register. Upon sending the replacement request RR or receiving a confirmation RC for successful registration, the input token T1 may be deleted in the secure token transaction unit TU1 and/or the token record may be deleted, i.e., the transaction channel closed.

According to a first exemplary embodiment of the secure token transaction unit TU1, TU2 according to an aspect of the invention, the secure token transaction unit TU1 preferably keeps track of its transaction partner TU2. Accordingly, the first intermediate token T1 may be stored in a token record, along with a partner identifier P-ID based on which the transaction partner TU2 may be identified. In this embodiment, the structure of the token record may be as follows: partner identifier P-ID; own intermediate token T2, T4; replacement request RR; input token T1. Optionally, the token record may comprise a further data field in which the registration confirmation RC may be stored.

Based on the partner identifier P-ID, the control module 4 of the secure token transaction unit TU1 may identify or recognize the secure partner token transaction unit TU2 and store the partner identifier P-ID in a new token record or - if the transaction partner is already known to the secure token transaction unit TU1 from a previous transaction, access the respective token record.

For a second transaction, each of the partner transaction units TU1, TU2 may check, whether a common token record exists. If so, the previous replacement request RR1 is substituted by the second replacement request RR2, and at least the monetary value v2, v3 of the first intermediate token pair T2, T3 may be updated to generate the second intermediate token T4 and the second intermediate partner token T5. Preferably, also the private keys r4, r5 are newly generated for the second intermediate token pair T4, T5. If no common token record is found, or if the previous replacement request RR1 is registered at least on one side, a new token record may be generated, and a new input token will be locked.

The intermediate token T2, T4 may be stored in the token record of the secure token transaction unit TU1, and the intermediate partner token T3, T5 may be stored in a token record of the secure partner transaction unit TU2. In one embodiment, the control module of the respective secure token transaction unit TU1, TU2 may lock the respective intermediate token, while any of the transaction partners TU1, TU2 may reconcile its intermediate token T2, T3, T4, T5 anytime by registering the latest transaction with the secure token transaction register T-Reg.

In the use case of a full refund, the input token may be disassociated from the token record and the token records may be discarded. Alternatively, the monetary value v5 of the second intermediate partner token T5 may be set to 0, and the monetary value v4 of the intermediate token T4 may be updated to the monetary value v1 of the input token, wherein upon registering the second replacement request RR2, the second intermediate token T4 essentially substitutes the input token T1 one-to-one.

Table 1 provides an example for different states of the token record stored in the secure token transaction unit TU1 according to the first embodiment.

**Table 1**

| Time | Attribute 1 | Attribute 2 | Attribute 3 | Attribute 4 |
|---|---|---|---|---|
| Before first transaction | void | T1 | void | void |
| After first transaction | P-ID1 | T2, RR2 | T1 | void |
| After second transaction | P-ID1 | T4, RR2 | T1 | void |
| After registration | P-ID1 or void | T4 | void | RC or void |
| After third transaction | P-ID1 | T6, RR3 | T4 | void |

According to a second exemplary embodiment, the secure token transaction unit TU1 may additionally execute transactions with a third secure token transaction unit (not shown) based on the same input token. In this case, the control module 4 may generate a new token record in which the partner identifier P-ID of the third token transaction unit may be stored and associate the new token record to the same input token T1. This scenario may be termed a "multi-transformation" of the input token T1, or "multi-split".

This second embodiment is illustrated by the following concrete example. A first secure token transaction unit TU1, also referred to as card 1, may comprise the input token T1 having a monetary value v1 of 100. The token storages of a second secure token transaction unit TU2, also referred to as card 2, and a third secure token transaction unit TU3, also referred to as card 3, may be empty. In a first transaction, card 1 may pay a monetary value of 10 to card 2. Accordingly, card 1 locks the input token T1, stores an intermediate token T2 having a monetary value v2 of 90 and a first replacement request RR1 in its token record. Card 2 may store the intermediate partner token T3 having a value of 10 and the first replacement request in its token record. Next, in a second transaction, card 1 may pay a monetary value of 5 to card 3. Accordingly, card 1 may update the monetary value v2 of its intermediate token T1 to 85 and substitute the first replacement request RR1 by a multi-replacement request encoding the multi-transformation. Card 3 may store another intermediate partner token T4 having a value of 5 and a second replacement request RR2 in its token record. In case card 2 reconciles, its intermediate partner token T2 is updated to an output token, whereas a monetary value of 90 remains to be reclaimed- 85 for card 1 and 5 for card 3. In case card 1 reconciles, the secure token reference register T-Reg may determine that the input token T1 has been involved in a multi-transformation. The control module 2 of the secure token reference register T-Reg may be configured to recognize a multi-transformation based on the multi-replacement request, which may include one input token reference TR1, an intermediate token reference T2 and two or more intermediate partner token references T3, T4. The proof of the multi-replacement request may be different than the proof of the first replacement request RR1 registered by card 2, yet the secure token reference register T-Reg may verify the multi-replacement request.

According to a third exemplary embodiment, the secure token transaction unit may selectively register a specific intermediate token in a replacement request RR.

Table 2 provides an example for different states of the token record stored in the secure token transaction unit TU1 according to the first embodiment.

**Table 2**

| Time | Attribute 1 | Attribute 2 |
|---|---|---|
| Before first transaction with TU2 | T1 | Void |
| After first transaction with TU2 | T2, RR1 | T1 |
| After second transaction with TU2 | T4, RR2 | T1 |
| After registration of T5 by TU2 | T4, RR2 | T1 |
| After third transaction with TU3 | T6, RR3 | T1 |
| After registration of T7 by TU2 | T6, RR3 | T1 |

In other words, the token record comprising the own intermediate token T4, T6 and the replacement requests RR2, RR3 may remain exactly the same even after the respective transaction partner TU2, TU3 has registered its associated intermediate partner token T5, T7, respectively. The replacement request RR2 may be additionally signed by the private key r5 of the intermediate partner token T5 in the secure partner token transaction unit TU2 to ensure that only the unit TU2 may register the intermediate token T5. Similarly, the replacement request RR3 may be additionally signed by the private key r7 of the intermediate partner token T7 in the secure partner token transaction unit TU3.

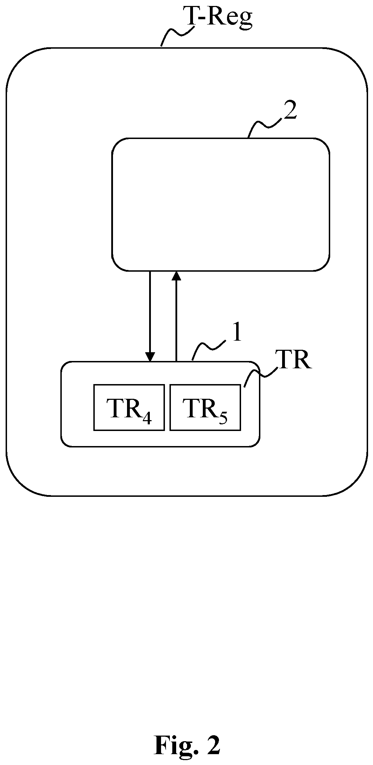

Fig. 2 shows an exemplary embodiment of a secure token reference register T-Reg according to an aspect of the invention.

The secure token reference register T-Reg is a unit within the transaction system TS and is either a central register or database 1 of the transaction system TS or a decentralized register or database (DLT) of the transaction system TS. The secure token reference register T-Reg comprises a secure memory as a storage unit 1 and a control module 2.

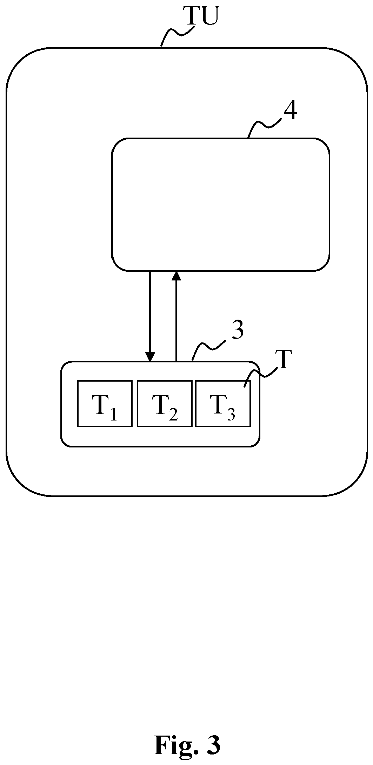

Fig. 3 shows an exemplary embodiment of a secure token transaction unit according to an aspect of the invention.

The secure token transaction unit TU comprises a secure memory 3 for storing tokens T and a control module 4 for transforming and exchanging tokens T and generating token references TR.

A token T may be stored, for example, in a secure wallet, as the secure token transaction unit TU. These wallets are, for example, software applications within a terminal device in which the TU is operationally embedded. A wallet may be set up as an application on a smartphone, smartcard, or payment terminal. The wallet is used to securely manage tokens T of the TU, generate token references TR, transform tokens T, and/or exchange tokens T. Wallets are used to communicate with the token reference register T-Reg, generate registration requests RR to the token reference register T-Reg, transform tokens T (change) and/or perform transaction of token T to another TU.

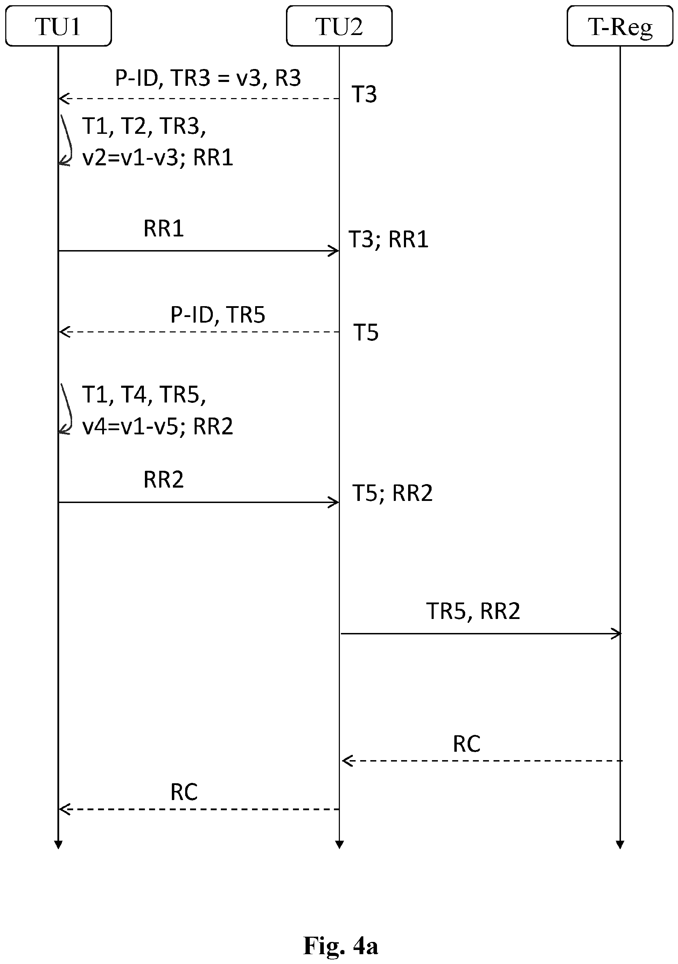

Fig. 4a summarizes a method for securing a transaction of a central bank digital currency token in an electronic payment transaction system.

The secure partner transaction unit TU2 may request a payment transaction by providing a token reference TR3 comprising a monetary value v3 along with a public key R3 to the secure token transaction unit TU1. The secure partner transaction unit TU2 may generate and store the private key r3 along with the monetary value v3 in a token record as intermediate partner token T3. The secure partner transaction unit TU2 may further provide its partner identifier P-ID to the secure token transaction unit TU1.

As being the first transaction between the transaction partner TU1, TU2, the secure token transaction unit TU1 may not recognize the partner identifier and may generate a new token record in which a first intermediate token T2 is to be stored. The secure token transaction unit TU1 may generate, based on an input token T1, the first intermediate token T2 having a monetary value v2 corresponding to the difference between the monetary value v1 of the input token and the monetary value v3 received from the transaction partner TU2. The secure token transaction unit TU1 may generate a token reference TR1, TR2 for the input token T1 and the first intermediate token T2 and generate a first replacement request RR1, which is also stored in the token record.

The secure token transaction unit TU1 may send the first replacement request RR1 to the secure partner transaction unit TU2 as a proof for the first transaction. This step may conclude the first transaction.

For a second transaction, the partner unit TU2 may request another monetary value v5 by providing a respective token reference TR5 and its partner identifier to the secure token transaction unit TU1.

The secure token transaction unit TU1 may generate a second intermediate token T4 based on the received token reference TR5 and a second replacement request RR2. Moreover, the secure token transaction unit TU1 substitutes the first replacement request RR1 by the second replacement request RR2 and keeps the input token T1 in its secure memory, where it may be locked.

The secure token transaction unit TU1 may send the second replacement request RR2 to the transaction partner TU2, which also updates its token record by substituting the first intermediate partner token T3 by the second intermediate partner token T5 and the first replacement request RR1 by the second replacement request RR2.

Each of the transaction partners TU1, TU2 may selectively register its intermediate partner token T4, T5 with the secure token reference register T-Reg. In addition or alternatively, any of the transaction partners TU1, TU2 may register both intermediate tokens T4, T5 generated during the transaction by transmitting the second replacement request RR2 to the secure token reference register T-Reg.

The secure token reference register T-Reg may confirm successful registration by a registration confirmation RC, which the partner transaction unit TU2 may forward to the secure token transaction unit TU1. The registration confirmation may be optionally stored in the token record.

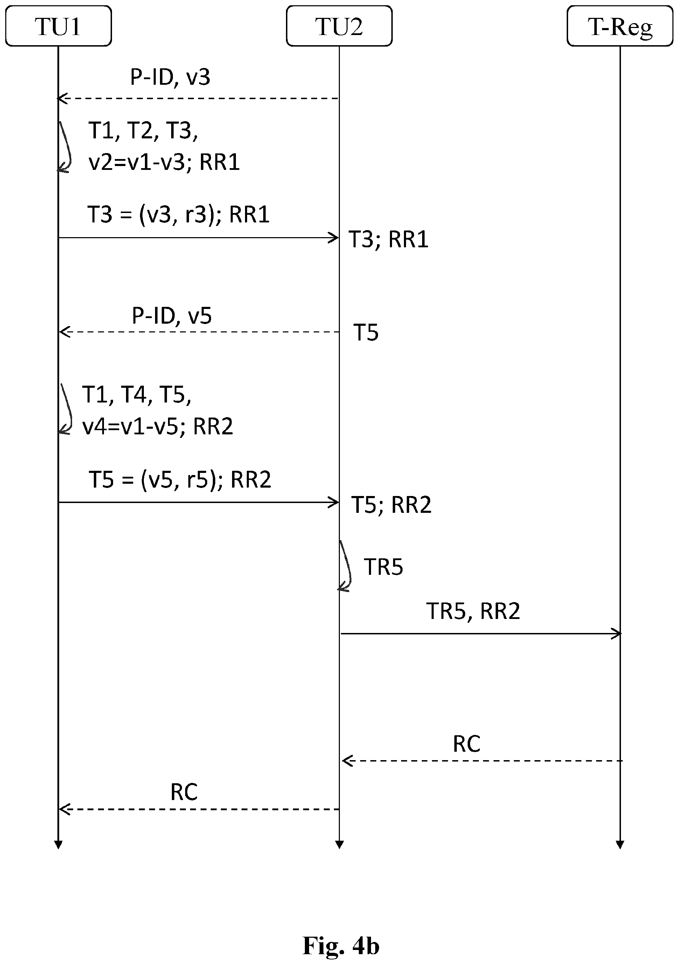

Fig. 4b summarizes a further exemplary embodiment of a method for securing a transaction of a central bank digital currency token in an electronic payment transaction system.

In contrast to the method shown in Fig. 4a, the secure partner transaction unit TU2 may request a payment transaction by providing only a monetary value v3 to the secure token transaction unit TU1. In this scenario, the secure partner transaction unit TU2 does not yet possess the intermediate partner token T3, but only knows its monetary value. The secure partner transaction unit TU2 may further provide its partner identifier P-ID to the secure token transaction unit TU1.

Subsequently, the secure token transaction unit TU1 may generate the first intermediate token T2 and the first intermediate partner token T3, based on the input received by the transaction partner TU2 and the input token T1, which the secure token transaction unit TU1 owns. The control module 4 of the secure token transaction unit TU1 may determine the monetary value v2 of the first intermediate token T2 as the difference between the monetary value v1 of the input token and the monetary value v3 received from the transaction partner TU2. The secure token transaction unit TU1 may generate a token reference TR1, TR2, TR3 for the input token T1, the first intermediate token T2 and the first intermediate partner token T3, and generate a first replacement request RR1.

As being the first transaction between the transaction partner TU1, TU2, the secure token transaction unit TU1 may not recognize the partner identifier and may generate a new token record in which the first intermediate token T2 and the first replacement request RR1 is to be stored.

Next, the secure token transaction unit TU1 may send the generated first intermediate partner token T3 and the first replacement request RR1 to the secure partner transaction unit TU2 which serves as a proof for the first transaction. This step may conclude the first transaction. According to this step, the ownership of the first intermediate partner token changes from the secure token transaction unit TU1, which generated the token T3, to the secure partner transaction unit TU2.

The transfer of the first intermediate partner token T3 includes at least a transfer of the private key r3 of the first intermediate partner token T3. In one embodiment, the transfer further includes the monetary value v3 of the first intermediate partner token T3.

For a second transaction, the partner unit TU2 may request another monetary value v5 and may provide its partner identifier to the secure token transaction unit TU1.

The secure token transaction unit TU1 may generate a second intermediate token T4, a second intermediate partner token T5 based on the received token reference TR5, and a second replacement request RR2. Moreover, the secure token transaction unit TU1 substitutes the first replacement request RR1 by the second replacement request RR2 and keeps the input token T1 in its secure memory, where it may be locked.

The secure token transaction unit TU1 may send the second replacement request RR2 along with the second intermediate partner token T5 to the transaction partner TU2, which also updates its token record by substituting the first intermediate partner token T3 by the second intermediate partner token T5 and the first replacement request RR1 by the second replacement request RR2.

Each of the transaction partners TU1, TU2 may selectively register its intermediate partner token T4, T5 with the secure token reference register T-Reg. In addition or alternatively, any of the transaction partners TU1, TU2 may register both intermediate tokens T4, T5 generated during the transaction by transmitting the second replacement request RR2 to the secure token reference register T-Reg.

The secure token reference register T-Reg may confirm successful registration by a registration confirmation RC, as described above with respect to Fig. 4a.

In other words, relating both to Fig. 4a and Fig. 4b, in course of a payment transaction, the monetary value v1 of the input token T1 may be locked, i.e., the private key r1 of the input token T1 may be kept in the secure token transaction unit TU1 on the payer side. The first transaction is signed by the private key r1, wherein the first intermediate partner token may be sent to the partner transaction unit TU2 on the receiver side. The difference to known protocols for CBDC transactions is that the original value note key (private key r1) is kept at the sender side - in order to update the token record between both parties TU1, TU2. The partner transaction unit TU2 may mark the received intermediate partner token T3 as locked, since that would prevent updates to the token record. In a subsequent payment transaction between the pair TU1, TU2, only the intermediate tokens T2, T3 which are stored on each side need to be updated. In order to not reuse keys, the first intermediate partner token T3 may be deleted and/or substituted by a second intermediate partner token T5, i.e., a new intermediate partner token may be generated by the original sender TU1 and sent to the original receiver TU2, together with the new proof.

In one embodiment, the secure token transaction unit TU1 and/or the secure partner token transaction unit may merge the respective intermediate token T2, T3, T4, T5 with a further input token stored in their secure memory, despite the intermediate token T2, T3, T4, T5 is being locked. A transaction which involves a locked intermediate token T2, T3, T4, T5 may force blocking or closing the original transaction channel. In contrary to reconciling an intermediate token T2, T3, T4, T5, the corresponding replacement request RR1, RR2 needs to be kept in the original token record or in a token record generated for the new transaction (e.g., offline payment) or reconciliation involving the locked intermediate token T2, T3, T4, T5. In the latter case, the original token record may be deleted for closing the original transaction channel. If the replacement request RR1, RR2 remains in the original token record, instead of deleting the token record, it may be marked by a flag indicating that the intermediate token T2, T3, T4, T5 is merged in a further transaction. This flag being set may prevent a further transaction involving the original token record, i.e., the intermediate token T2, T3, T4, T5. In other words, setting the flag may block the transaction channel between the transaction partners TU1, TU2.

The disclosed protocol is most interesting for 1-to-many payment transactions (e.g. user to merchants) of many-to-1 payment transactions (merchants to distributer), because the proofs on each side of the transactions group linearly per payment in a worst-case scenario. In a best-case scenario, the number of proofs is constant in case multiple payments are made with the same participants.

### REFERENCE SIGNS

- TS: Electronic (payment) transaction system
- TU: Secure token transaction unit in TS, wallet
- TU-ID: Identification of TU, Wallet-ID
- T-Reg: Token reference register

- 1: Storage unit of T-Reg
- 2: Control module of T-Reg

- Reg-LAY: Registration layer
- TU-LAY: Token transfer layer
- RR: Registration request, replacement request
- RR_{sig}: Signed RR
- P-ID: Partner identifier
- T: Token
- TR: Token reference
- v: Monetary value of token T
- r: Secret, private key of token-individual key pair
- R: Public key of token-individual key pair
- sig: Signature
- RC: Replacement request confirmation or registration confirmation
- 3: Secure memory of TU
- 4: Control module of TU
- 15: Transfer of token, token references, registration requests
- 16: Transformation of T1
- 21: Generate token reference
- 22: Generate RR
- 31: Send RR to T-Reg
- 41: Remove TR₁; store TR₄ and/or TR₅

## Claims

1. A secure token transaction unit within an electronic payment transaction system (TS), the secure token transaction unit comprising:
- a secure memory (3) for storing a plurality of token (T), wherein each token (T) is a monetary value token, preferably a central bank digital currency token;
- a control module (4) configured to:
a) generate, for a first transaction according to which an input token (T1) stored in the secure memory (3) is transformed to a first intermediate token (T2) and a first intermediate partner token (T3), a first replacement request (RR1); and
b) generate, related to the first transaction, a token record, in which the first intermediate token (T2) and the first replacement request (RR1) are stored;
**characterized by**
c) update, related to a second transaction, the token record by substituting the first replacement request (RR1) by a second replacement request (RR2).

2. Secure token transaction unit according to claim 1, wherein in the second replacement request (RR2), at least the first intermediate token (T2) is amended with respect to the first replacement request (RR1) and/or wherein the first intermediate token (T2) is substituted in the token record by a second intermediate token (T4), preferably including at least an amended monetary value (v4).

3. Secure token transaction unit according to any of claims 1 or 2, wherein the control module (4) is further configured to store a partner identifier (P-ID) in the token record,
wherein the partner identifier (P-ID) preferably is one of a random number, a wallet ID, a public key or combinations thereof, and
wherein the control module (4) preferably is configured to update the token record (step c) only if the partner identifier (P-ID) of a secure partner token transaction unit (TU2) corresponds to the partner identifier (P-ID) stored in the token record.

4. Secure token transaction unit according to any of the preceding claims,
wherein the control module (4) is further configured to transmit a replacement request (RR1, RR2) stored in the token record to a secure token reference register (T-Reg) for selectively registering a current intermediate token (T2, T3) stored in the token record.

5. Secure token transaction unit according to any of the preceding claims,
wherein the control module (4) is further configured to receive, from the secure token reference register (T-Reg) or from a secure partner token transaction unit (TU2), upon registration of a current intermediate token stored (T2, T3) in the token record, a replacement request confirmation (RC), and to store the replacement request confirmation (RC) in the secure memory (3), preferably in the token record.

6. Secure token transaction unit according to the preceding claim, wherein upon receiving and/or storing the replacement request confirmation (RC), the control module (4) is configured to delete the input token (T1) from the secure memory (3).

7. Secure token transaction unit according to any of the preceding claims,
wherein the control module (4) is further configured to sign each replacement request (RR1, RR2) based on an individual token secret (r1) of the input token (T1),
wherein the token record preferably comprises the individual token secret (r1) of the input token.

8. Secure token transaction unit according to any of the preceding claims, wherein the control module (4) is further configured to:
send the first intermediate partner token (T3) and preferably the first replacement request (RR1) to a secure partner token transaction unit and/or
receive the first intermediate partner token (T3) and preferably the first replacement request (RR1) from a secure partner token transaction unit (TU2).

9. Secure token transaction unit according to any of the preceding claims 3 to 8, wherein the control module (4) is configured to receive a transaction request comprising the partner identifier (P-ID), check, whether the token record assigned to the partner identifier (P-ID) exists and/or the transaction request indicates selecting the token record.

10. A secure token reference register (T-Reg) within an electronic payment transaction system (TS), the secure token reference register (T-Reg) comprising:
- a secure memory (1) for storing registered token references (TR);
- a secure communication interface for receiving and sending data to one or more secure token transaction units (TU1, TU2) of the electronic payment transaction system (TS);
- a control module (2) which is configured to
a) receive a replacement request (RR1, RR2) from the secure token transaction unit (TU1, TU2), wherein the replacement requests (RR1, RR2) comprises an input token reference (TR1) and an intermediate token reference (TR2) and/or an intermediate partner token reference (TR3);
b) store the intermediate token reference (TR2) and/or the intermediate partner token reference (TR3) in the secure memory (1); and
c) send a replacement request confirmation (RC) to the secure token transaction unit (TU1, TU2).

11. The secure token reference register (T-Reg) according to claim 10,
wherein the replacement request (RR1, RR2) further comprises a signature (sig);
wherein the control module (2) is further configured to determine whether the intermediate token reference (TR2) and/or the intermediate partner token reference (TR3) is valid by verifying the intermediate token reference (TR2) and/or the intermediate partner token reference (TR3) based on the signature (sig); and
wherein the control module (2) is configured to execute steps b) and c) only if the signature (sig) is valid.

12. The secure token reference register (T-Reg) according to any of the claims 10 or 11, wherein the control module (2) is further configured to extend a data record comprising the input token reference (TR1) in the secure memory (1) by an additional data field comprising a remaining monetary value of the input token (T1).

13. An electronic payment transaction system (TS) comprising at least two secure token transaction units (TU1, TU2) according to any of claims 1 to 9 and a secure token reference register (T-Reg) according to any of claims 10 to 12.

14. A method for securing a transaction of a central bank digital currency token (T) in an electronic payment transaction system (TS), the electronic payment transaction system (TS) comprising at least two secure token transaction units (TU1, TU2) and a secure token reference register (T-Reg), the method comprising:
a) generating, for a first transaction according to which an input token (T1) stored in the secure memory is transformed to a first intermediate token (T2) and a first intermediate partner token (T3), a first replacement request (RR1); and
b) generating, related to the first transaction, a token record, in which the first intermediate token (T2) and the first replacement request (RR1) are stored;
**characterized by**
c) updating, related to a second transaction, the token record by substituting the first replacement request (RR1) by a second replacement request (RR2).

15. The method according to claim 14, wherein the method further comprises amending, in the second replacement request (RR2), at least the first intermediate token (T2) with respect to the first replacement request (RR1) and/or substituting the first intermediate token (T2) in the token record by a second intermediate token (T4), the second intermediate token (T4) preferably including at least an amended monetary value (v4).
